# EUROPEAN PATENT SPECIFICATION

(11) **EP 4 054 345 B1**
(45) Date of publication and mention of the grant of the patent: **28.10.2026**
(21) Application number: 20811767.1
(22) Date of filing: 05.11.2020
(51) Int. Cl.: A23G 1/34, A21D 13/00, A23G 1/48, A23G 1/56, A23L 7/20, A23L 25/10, A23L 27/10

(54) **METHOD FOR REPLACING PEANUTS IN FOOD**
VERFAHREN ZUM ERSETZEN VON ERDNÜSSEN IN NAHRUNGSMITTELN
PROCÉDÉ DE REMPLACEMENT DES CACAHUÈTES DANS DES ALIMENTS

(30) Priority: 06.11.2019 NL 2024168
(43) Date of publication of application: 14.09.2022
(73) Proprietor: Mans, Paul-Alexander Peter Marie, 6231 AK Meerssen (NL)
(72) Inventor: Mans, Paul-Alexander Peter Marie, 6231 AK Meerssen (NL)
(74) Representative: Algemeen Octrooi- en Merkenbureau B.V.
(86) International application number: PCT/NL2020/050689
(87) International publication number: WO 2021/091378

(56) References cited:
- WO-A1-2013/150101
- DE-A1- 4 017 114
- US-A- 4 356 209
- "Beer: a quality perspective", 14 October 2008, ELSEVIER SCIENCE & TECHNOLOGY, article SHELLHAMMER THOMAS H: "Beer color", pages: 220 - 233, XP093385139
- DATABASE GNPD [online] "MINTEL"; 17 July 2014 (2014-07-17), "Peanut Cereal Bar", XP093385323, retrieved from https://www.gnpd.com/sinatra/recordpage/2551961/ Database accession no. 2551961
- DATABASE GNPD [online] "MINTEL"; 9 February 2018 (2018-02-09), "Hazelnut Flavoured Muesli Bar", XP093385322, retrieved from https://www.gnpd.com/sinatra/recordpage/5451881/ Database accession no. 5451881
- DATABASE GNPD [online] "MINTEL"; 21 May 2018 (2018-05-21), "Chocolate and Nuts XXL Muesli Bar", XP093385178, retrieved from https://www.gnpd.com/sinatra/recordpage/5676475/ Database accession no. 5676475
- DATABASE GNPD [online] "MINTEL"; 9 August 2016 (2016-08-09), "Red Apples, Peanuts & Pumpkin Seeds Muesli Bars", XP093385348, retrieved from https://www.gnpd.com/sinatra/recordpage/4201537/ Database accession no. 4201537
- MARCHESSEAU PIERRE: "Recette Mousse au chocolat en poudre", 30 May 2008 (2008-05-30), XP055775255, Retrieved from the Internet <URL:https://www.moussechocolat.net/comment-faire-de-la-mousse-au-chocolat-avec-du-chocolat-en-poudre/> [retrieved on 20210211]
- ANONYMOUS: "Brownie au cacao en poudre", 12 October 2017 (2017-10-12), XP055775245, Retrieved from the Internet <URL:https://www.cuisineaz.com/recettes/brownie-au-cacao-en-poudre-76543.aspx> [retrieved on 20210211]
- ANONYMOUS: "Satésaus", 7 November 2017 (2017-11-07), XP055775250, Retrieved from the Internet <URL:https://brendakookt.nl/2017/11/07/satesaus/> [retrieved on 20210211]
- ANONYMOUS: "Standard reference method", 4 January 2019 (2019-01-04), XP055775118, Retrieved from the Internet <URL:https://en.wikipedia.org/w/index.php?title=Standard_Reference_Method&oldid=876817998> [retrieved on 20210211]

## Description

The invention relates to a method for replacing peanuts in food. The invention further relates to a method for manufacturing a food product having peanut flavour and to food products obtained with this method.

In today's society, consumers are becoming more and more aware of the environmental costs of consuming certain foods. Increasingly, the sustainability of products is being considered. One of the aspects that plays a role is the distance that foods or ingredients have to travel before they reach the consumer. Consumers prefer locally produced products.

With certain food products the issue arises that they are grown and harvested in specific climatic zones, such as in tropical areas. Examples are cocoa beans and peanuts. So there is a need to replace such ingredients with local products and flavours.

In addition, people struggle more and more with allergies to certain ingredients, like peanut, preventing families of enjoying peanut flavoured dishes together at home.

WO 2013/1 50101 relates to a method of providing a cocoa replacer based on a material selected from roasted wheat, roasted and/or malted barley, comprising the steps of addition of the roasted wheat, roasted and/or malted barley to water at an initial temperature of at least 65°C in an evaporation vessel, maintaining the initial temperature for at least 30 minutes, adding cold water, and immediately spray-drying the solution to give the cocoa replacer, wherein the water in the first step comprises from 12-22% of the total weight of roasted wheat, roasted and/or malted barley and water, and the water in the second step comprises from 25-40% of the water in the first step.

US4356209 relates to an extended cocoa powder comprising cocoa and a defatted wheat germ having up to about 2% by weight of fat content having been toasted to a medium to dark color and having a corresponding mild to strong cocoa taste.

DE4017114 relates to a process for the preparation of a cereal germ product for food purposes, wherein grain germs are fed into a fluidized bed spray granulator and granulated at a product temperature of up to max. 40°C to a moisture content of 5.0-6.0%, wherein hydrocolloids and/or fats and/or oils and/or pharmaceutical coating substances and/or modified cereal starches and, if necessary, flavourings and/or aromas are then sprayed on for coating, at least one layer consists of a hydrophobic grease and/or oil, and fats and/or oils are sprayed at a product temperature of max. 25°C and the other substances including emulsions at a product temperature of max. 40°C.

An article published published on the internet in the name of Marchesseau Pierre: "Recette Mousse au chocolat en poudre", 30 May 2008 discloses a recipe for chocolate powder mousse, consisting of unsweetened chocolate powder, caster sugar, vanilla sugar, egg yolks, egg whites and semi-skimmed milk.

An article published on the internet titled "Brownie au cacao en poudre", 12 October 2017, discloses a brownie cacao powder recipe, consisting of flour, eggs, sugar, cocoa powder, vanilla sugar and salt.

An article published on the internet as "Satésaus", 7 November 2017, discloses a recipe for homemade peanut sauce, wherein the most important ingredients are milk and peanut butter, but soy sauce, groundnuts and sugar as well.

An article published on the internet titled "Standard reference method", 4 January 2019, discloses Standard Reference Method or SRM which is one of several systems modern brewers use to specify beer color. Determination of the SRM value involves measuring the attenuation of light of a particular wavelength (430 nm) in passing through 1 cm of the beer, expressing the attenuation as an absorption and scaling the absorption by a constant.

Therefore, the present invention provides a method for replacing peanuts in a food product, characterized in that malt or malt extract is used.

The use of malt in foods is known. Malt is mainly used in brewing beer. In the malting process, cereal grains, in particular barley, are allowed to germinate. Then the germinated cereal grains (the malt) are dried. Drying can take place at different temperatures in one or more steps, so that different types of malt are obtained.

The malts obtained are characterized by taste and colour. Colour is measured in EBC (European Brewery Convention) units. The darker the malt, the higher the EBC value.

Malts which are particularly suitable for the invention are amber malt.

Amber malt is a malt that is slowly dried at a temperature of 130-160 °C. According to the invention, an amber malt is used having a colour value EBC of 40-60. The amber malt is used to replace peanuts.

The malt can be used as such in the food product, the malt being preferably ground into a malt flour and this malt flour subsequently sifted. This grinding can be carried out, for example, in a coffee grinder.

In addition, malt extract can be used. To this end, the malt is brought into contact with a milk product and heated, whereby the milk product takes on the malt flavour, resulting in a malt extract. The malt can also be extracted into water. Subsequently, the mixture of milk product or water and malt is sifted, the malt extract being further used in the food product. The milk product can be an animal milk product, such as animal milk or cream, in particular from cows or goats. The milk product can also be a vegetable milk product, such as almond, soy, oat or coconut milk.

### FIRST ASPECT OF INVENTION

According to a first aspect of the invention, malt or malt extract is used to replace peanuts. For this method, the amber malt is mixed with a milk product. The milk product can be an animal or plant milk product and can be a milk, cream or butter, or combinations thereof. In particular, the amber malt is used to make an amber malt extract in (animal or plant) milk or cream. To this end, the amber malt is crushed, heated in the milk product at a temperature of 40 to 90 °C for 10 minutes to 1 hour. The amount of amber malt is 15-40% by weight based on the total weight of amber malt and milk product.

The amber malt is then removed by sifting, leaving a milk product with amber malt extract. This milk product can then serve as a basis for sauces. Conventional flavourings and thickeners are added for this purpose. Examples of flavourings are red pepper (chili), lime, coconut and ginger.

The invention also relates to a peanut flavoured food product containing amber malt or amber malt extract, wherein the amber malt has a colour value EBC of 40-60, and wherein the food product contains less than 1 wt.%, of peanuts, based on the weight of the food product. Most preferably, the food product does not contain peanuts (0% by weight).

The peanut taste can be determined by using a taste panel. This means that a number of test subjects taste the food and write down their experience. Optionally, a food with a comparable composition that does contain peanuts can be used for comparison.

In particular, the invention relates to a peanut flavoured food product, which is a satay sauce, comprising (plant) milk with amber malt extract, flavourings and thickener, wherein the food product contains less than 1% by weight, based on the weight of the food product, peanuts.

The food product according to the invention can also be a biscuit or bar. The combination of chocolate malt and amber malt can be used in a bar with a taste comparable to the peanut / chocolate bar Snickers^{®}.

As mentioned, this application is not limited to cow's milk, normal malts, sugar, and/or meat and meat based stocks. Anywhere in this application where the use of milk, cream or butter is mentioned, also vegan friendly and/or allergen free versions of milk or cream, like oat milk, goat milk or coconut oil, can be used, in any kind of mix. Anywhere in this application where the use of malt or flour is mentioned, also allergen free versions of malt or flower, like gluten free malt or flower, or for example almond flower can be used, in any kind of mix. Anywhere in this application where the use of sugar is mentioned, honey, stevia, aspartame, or another known sugar replacement can be used, in any kind of mix. Anywhere in the application where meat, eggs, or meat based stocks are being mentioned they can be replaced by a vegan and/or allergy free alternative like tofu, aquafaba, or vegetable stock.

### Examples

### Example 1: Sauce with peanut flavour

1.5 litres of milk and 0.5 kg of crushed amber malt (Swaen ^{©} Amber) were combined and heated over low heat. After half an hour, the mixture was sifted into a malt fraction and a milk fraction.

The milk fraction (approx. 1.2 litre) was mixed with 40 g chili sauce, 60 g ginger syrup, 25 g chicken stock powder, 10 g garlic pulp, 80 g soy sauce, 20 g red curry paste, 10 g lime juice. The whole was heated until all ingredients were mixed Then the sauce was thickened with 30 g of brown roux.

The sauce was judged by a tasting panel and characterized as having a deep peanut flavour.

### Example 2 Brownie (not part of the invention)

350 gr butter, 300 gr sugar, 150 gr honey, 150 gr ground and sifted chocolate malt (BlackSwaen ^{©} Chocolate B) and a pinch of salt were melted in a pan over low heat. 150 g of flour was added and mixed. The pan was taken off the heat and then 6 whipped eggs at room temperature were added to the mixture and mixed until a homogeneous mass was obtained. A brownie of the mixture was baked in a 20x20 cm baking tin at 190 °C for 25 minutes.

The brownie was judged by a tasting panel and having a deep chocolate flavour.

### Example 3 Chocolate Flavoured Mousse (not part of the invention)

200 gr of butter and 100 gr of ground and sifted chocolate malt (BlackSwaen^{®} Chocolate B) were mixed at room temperature until a smooth mixture. 75 grams of sugar and 150 grams of egg white were beaten until stiff peaks. 75 g of sugar and 4.5 dl of cream were beaten to a fluffy mass. The three mixtures (butter, egg white and whipped cream) were gently mixed with a spatula until a homogeneous mass. The mixture was then placed in a refrigerator at 4 °C until a firm mousse had been formed.

The mousse was judged by a tasting panel and characterized as having a deep chocolate flavour.

### Example 4 Chocolate flavoured milk (not part of the invention)

50 gr of ground and sifted caramel malt (GoldSwaen ^{©} Brown), 25 gr of ground and sifted chocolate malt (BlackSwaen ^{©} Chocolate B) and 75 gr of sugar were ground to a powder. 20 gr of the powder was dissolved in 200 ml of warm milk.

The milk was judged by a tasting panel and characterized as having a deep chocolate flavour.

## Claims

1. A method for replacing peanuts in a food product, wherein a malt or malt extract is used, **characterized in that** an amber malt having a colour value EBC of 40-60 is used, wherein said malt is mixed with a milk product, wherein the amount of said malt is 15-40% by weight, based on the total weight of said malt and milk product, wherein the food product contains less than 1 % by weight of peanuts, based on the weight of the food product.

2. The method according to claim 1, wherein the milk product is selected from milk, cream, butter and plant milk, or combinations thereof.

3. The method according to claim 2, for making a peanut flavoured sauce, comprising the steps of:
bruising the amber malt;
heating the bruised amber malt in a milk product;
removing the amber malt from the milk product by sifting to obtain a milk product containing amber malt extract;
mixing the milk product containing amber malt extract with other ingredients, such as flavourings and a thickening agent, to prepare a sauce.

4. A peanut flavoured food product containing an amber malt having a colour value EBC of 40-60, and wherein the food product contains less than 1% by weight of peanuts, based on the weight of the food product.

5. The peanut flavoured food product according to claim 4, which is a satay sauce, comprising a milk product, amber malt extract, flavourings and thickening agent, wherein the food product contains less than 1 % by weight of peanuts, based on the weight of the food product.

## Patentansprüche

1. Verfahren zum Ersetzen von Erdnüssen in einem Lebensmittelprodukt, wobei ein Malz oder Malzextrakt verwendet wird, **dadurch gekennzeichnet, dass** ein Ambermalz mit einem Farbwert (EBC) von 40 bis 60 verwendet wird, wobei das Malz mit einem Milchprodukt vermischt wird, wobei die Menge des Malzes 15 bis 40 Gew.-%, bezogen auf das Gesamtgewicht des Malzes und des Milchprodukts, beträgt, und wobei das Lebensmittelprodukt weniger als 1 Gew.-% Erdnüsse, bezogen auf das Gewicht des Lebensmittelprodukts, enthält.

2. Verfahren nach Anspruch 1, wobei das Milchprodukt aus der Gruppe ausgewählt ist, bestehend aus Milch, Sahne, Butter und Pflanzenmilch sowie Kombinationen hiervon.

3. Verfahren nach Anspruch 2 zur Herstellung einer Sauce mit Erdnussgeschmack umfasst die folgenden Schritte:
Zerkleinern des Bernsteinmalzes;
Erhitzen des zerkleinerten Bernsteinmalzes in einem Milchprodukt;
Entfernen des Bernsteinmalzes aus dem Milchprodukt durch Sieben, um ein Bernsteinmalzextrakt enthaltendes Milchprodukt zu erhalten;
Mischen des Bernsteinmalzextrakt enthaltenden Milchprodukts mit anderen Zutaten, wie zum Beispiel Aromen und einem Verdickungsmittel, zur Herstellung einer Sauce.

4. Erdnussaroma-Lebensmittel, das ein Ambermalz enthält, wobei das Ambermalz einen Farbwert EBC von 40-60 aufweist und das Lebensmittel, bezogen auf das Gewicht des Lebensmittels, weniger als 1 Gew.-%, an Erdnüssen enthält.

5. Erdnussaroma-Lebensmittel nach Anspruch 4, eine Satay-Sauce, bestehend aus einem Milchprodukt, Bernsteinmalzextrakt, Aromen und Verdickungsmittel, wobei das Lebensmittel weniger als 1 Gew.-%, Erdnüsse, bezogen auf das Gewicht des Lebensmittels enthält.

## Revendications

1. Procédé de remplacement des arachides dans un produit alimentaire, dans lequel un malt ou un extrait de malt est utilisé, **caractérisé en ce qu'** on utilise un malt ambré présentant une valeur de couleur EBC de 40 à 60, ledit malt étant mélangé à un produit laitier, la quantité dudit malt représentant de 15 à 40 % en poids, par rapport au poids total dudit malt et du produit laitier, le produit alimentaire contenant moins de 1 % en poids d'arachides, par rapport au poids du produit alimentaire.

2. Procédé selon la revendication 1, dans lequel le produit laitier est sélectionné parmi le lait, la crème, le beurre et le lait végétal, ou des combinaisons de ceux-ci.

3. Procédé selon la revendication 2, pour la fabrication d'une sauce aromatisée aux arachides, comprenant les étapes suivantes :
concasser le malt ambré ;
chauffer le malt ambré concassé dans un produit laitier ;
séparer le malt ambré du produit laitier par tamisage pour obtenir un produit laitier contenant de l'extrait de malt ambré ;
mélanger le produit laitier contenant de l'extrait de malt ambré avec d'autres ingrédients, tels que des arômes et un agent épaississant, pour préparer une sauce.

4. Produit alimentaire aromatisé à la cacahuète contenant du malt ambré, dans lequel le malt ambré a une valeur de couleur EBC de 40 à 60, et dans lequel le produit alimentaire contient moins de 1 % en poids, de cacahuètes, par rapport au poids du produit alimentaire.

5. Produit alimentaire aromatisé aux arachides selon la revendication 4, qui est une sauce satay, comprenant un produit laitier, de l'extrait de malt ambré, des arômes et un agent épaississant, dans lequel le produit alimentaire contient moins de 1 %, en poids, d'arachides, sur la base du poids du produit alimentaire.
